# EUROPÄISCHE PATENTSCHRIFT

(11) **EP 1 970 227 B1**
(45) Veröffentlichungstag und Bekanntmachung des Hinweises auf die Patenterteilung: **20.02.2013**
(21) Anmeldenummer: 07024269.8
(22) Anmeldetag: 14.12.2007
(51) Int. Cl.: B60G 17/02, B60G 15/06, H02K 7/06, F16F 15/02, H02K 11/00

(54) **Radaufhängung für Kraftfahrzeuge**
Wheel suspension for motor vehicles
Suspension de roues pour véhicules automobiles

(30) Priorität: 14.03.2007 DE 102007012204
(43) Veröffentlichungstag der Anmeldung: 17.09.2008
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 0 931 684
- EP-A- 1 681 181
- WO-A-88/04249
- DE-A1- 1 580 480
- DE-A1- 19 802 488
- DE-B3-102005 001 744
- FR-A- 2 696 223
- SU-A1- 793 821
- US-A- 5 560 638

## Beschreibung

Die Erfindung betrifft eine Radaufhängung für Kraftfahrzeuge gemäß dem Oberbegriff des Patentanspruches 1.

Aus der DE 10 2005 001 744 B3 ist eine Radaufhängung mit einem aktiven Federbein bekannt, bei dem eine oberhalb der Tragfeder konzentrisch angeordnete Speicherfeder vorgesehen ist, die der Federkraft der Tragfeder entgegenwirkt und somit die Verstellkräfte vermindert, die ein elektromechanischer Aktuator aufbringen muss, um über den axial verstellbaren Federteller des Federbeines eine Niveauverstellung und/oder einen Nick- und Wankausgleich am Kraftfahrzeug zu bewirken.

Problematisch ist jedoch die räumliche Anordnung des am Federbein integriert angeordneten Aktuators und der Speicherfeder, insbesondere bei Radaufhängungen mit gelenkten Rädern. Bei gelenkten Rädern kann sich nämlich ein Radträger-Arm aus der Felgenschüssel des Fahrzeugrads hinaus über das Fahrzeugrad erstrecken und an einem oberen Lenker angelenkt sein. Bei einer ungünstigen Stellposition des verschiebbar geführten Federtellers und/oder einem Lenkeinschlag des Fahrzeugrads besteht hier die Gefahr, dass der verstellbare Federteller mit dem Radträger-Arm oder dem Fahrzeugrad kollidiert.

Aus der FR-A-2 696 223 ist eine gattungsgemäße Aufhängung für ein Kraftfahrzeug bekannt, das ein Federbein aufweist, das aus einem Stoßdämpfer, einer Tragfeder und einer Speicherfeder gebildet ist. Aus der EP-A-1 681 181 ist eine weitere Radaufhängung mit einem Federbein bekannt, das eine Speicherfeder und eine Tragfeder aufweist. Aus der DE 15 80 480 A1 ist ein Federbein bekannt, das mit zwei Druckfedern ausgebildet ist, die so angeordnet sind, dass die Querkraft auf den Zylinder des Federbeins über alle Betriebszustände in engen Grenzen gehalten wird. Aus der DE 198 02 488 A1 ist eine Gasdruckfederung in einer Radaufhängung bekannt, bei der die Gasdruckfedern ebenfalls so angeordnet sind, dass die auf den Dämpfer wirkenden Querkräfte reduziert sind. Aus der WO 88/04249 A ist eine Luftfederung bestehend aus zwei Gasdruckfedern bekannt, die anstelle eines bekannten Federbeins, bestehend aus Stoßdämpfer und Schraubenfeder, in der Radaufhängung eingesetzt werden kann.

Aufgabe der Erfindung ist es, eine Radaufhängung der gattungsgemäßen Art bereitzustellen, die baulich kompakter und fertigungstechnisch günstiger gestaltet ist.

Diese Aufgabe wird erfindungsgemäß mit den Merkmalen des Patentanspruches 1 gelöst. Vorteilhafte Weiterbildungen der Erfindung beschreiben die jeweiligen Unteransprüche.

Erfindungsgemäß wird vorgeschlagen, dass die Speicherfeder durch zumindest zwei Einzelfedern, vorzugsweise Schraubendruckfedern, gebildet ist, die radial außerhalb der Tragfeder angeordnet sind. Dabei sind die Einzelfedern in der Draufsicht auf das Federbein gesehen beiderseits der Tragfeder und in Fahrzeuglängsrichtung ausgerichtet. Die erfindungsgemäß in zwei Einzelfedern "aufgeteilte" Speicherfeder kann so angeordnet werden, dass sie in den relevanten Abmessungen im Rahmen üblicher Federbein-Einbaumaße bleibt und somit problemlos verwendbar ist. Die zumindest zwei Schraubendruckfedern sind so angeordnet, dass sie trotzdem eine zentrische Federkraft auf das Federbein ausüben, also keine unzulässigen Biegemomente auf die Kolbenstange des Stoßdämpfers ausüben.

Besonders vorteilhaft können die beiden Schraubendruckfedern einen kleineren Durchmesser als die Tragfeder aufweisen, wobei bevorzugt deren gesamte Federkraft zur Federkraft der Tragfeder bei einer definierten Beladung des Kraftfahrzeuges, insbesondere bei Konstruktionslage und im unbeladenen Zustand, im Gleichgewicht ist.

Des Weiteren können die beiden Schraubendruckfedern im Durchmesser so ausgelegt sein, dass bei einer Radaufhängung für gelenkte Räder des Kraftfahrzeuges ein definierter Freigang bei vollem beidseitigen Lenkeinschlag der Räder sichergestellt ist.

Zur Erzielung einer günstigen, möglichst geringen axialen Baulänge des Federbeines können die beiden Schraubendruckfedern und die Tragfeder in Seitenansicht gesehen ineinander verschachtelt angeordnet sein.

Dabei kann fertigungstechnisch günstig der verstellbare Federteller im Querschnitt hutförmig mit axial zueinander versetzten Anlageflächen für die Tragfeder und die beiden Schraubendruckfedern gestaltet sein. In der Draufsicht kann daher der verstellbare Federteller ovalförmig gestaltet sein.

Der Aktuator kann in an sich bekannter Weise als ein um die Kolbenstange des Stoßdämpfers angeordneter Kugelschraubtrieb ausgebildet sein, dessen drehbar gelagerte Stellhülse von dem Rotor eines Elektromotors angetrieben ist und dessen axial verschiebbare Kugelmutter mit dem dritten Federteller verbunden ist. Daraus resultiert eine schnelle, verschleißarme und präzise Verstellung der Tragfeder, verbunden mit günstigen Einbaumaßen.

Des Weiteren können baulich vorteilhaft die beiden Schraubendruckfedern unterhalb des Elektromotors des Aktuators beiderseits der Tragfeder angeordnet sein. Dies ermöglicht eine in radialer Richtung ausreichend große Dimensionierung des Elektromotors mit entsprechend günstigen Stellmomenten.

Bevorzugt kann der dämpferseitige Federteller materialeinheitlich und einstückig an einer Dämpferstelze angeformt sein, die das Federbein mit einem Radaufhängungselement verbindet. Der dämpferseitige Federteller ist daher unmittelbar an der Dämpferstelze angeformt. Diese Maßnahme trägt vorteilhaft zu einer weiteren Verkürzung der Baulänge des Federbeines mit der Speicherfeder und der Tragfeder bei, wobei Befestigungsmittel für den dämpferseitigen Federteller entfallen können.

Im Gegensatz dazu ist im Stand der Technik der dämpferseitige Federteller - von der Dämpferstelze axial beabstandet - am Dämpferrohr vorgesehen. Der dämpferseitige Federteller ist dabei mit seiner Hutkrempe erst auf einer Axialhöhe des Dämpferrohrs angesetzt, bei der die Klemm-Lappen der herkömmlicherweise verwendeten Klemm-Klauen der Dämpferstelze nicht mehr stören, zwischen denen das Dämpferrohr geklemmt ist. Im Stand der Technik ist daher der Bauraum zwischen dem dämpferseitigen Federteller und der Dämpferstelze nicht nutzbar.

Schließlich kann in weiterer baulicher und montagetechnischer Vereinfachung das Dämpferrohr des Stoßdämpfers über eine koaxial zur Dämpfermittelachse ausgerichtete Gewindeverbindung in die Dämpferstelze eingeschraubt sein.

Ein Ausführungsbeispiel der Erfindung ist im folgenden mit weiteren Einzelheiten näher erläutert. Die schematische Zeichnung zeigt in:
- **Fig. 1**: in teilweiser Schnittdarstellung eine Radaufhängung für gelenkte Räder eines Kraftfahrzeuges mit mehreren Lenkern und einem Federbein, wobei am Federbein eine Tragfeder, zwei Schraubendruckfedern als Speicherfeder und ein Aktuator zur Höhenverstellung angeordnet sind;
- **Fig. 2** das: Federbein mit Tragfeder, Speicherfeder und Aktuator in einer Seitenschnittansicht gemäß Pfeil X der **Fig. 1****;**
- **Fig. 3**: eine die Einbauverhältnisse bei der Radaufhängung mit gelenkten Rädern darstellende Ansicht gemäß Pfeil Y der **Fig. 1****;** und
- **Fig. 4**: die am Dämpferrohr des Stoßdämpfers des Federbeines nach den **Fig. 1 bis 3** befestigte Dämpferstelze, die an einem Lenker der Radaufhängung angelenkt ist.

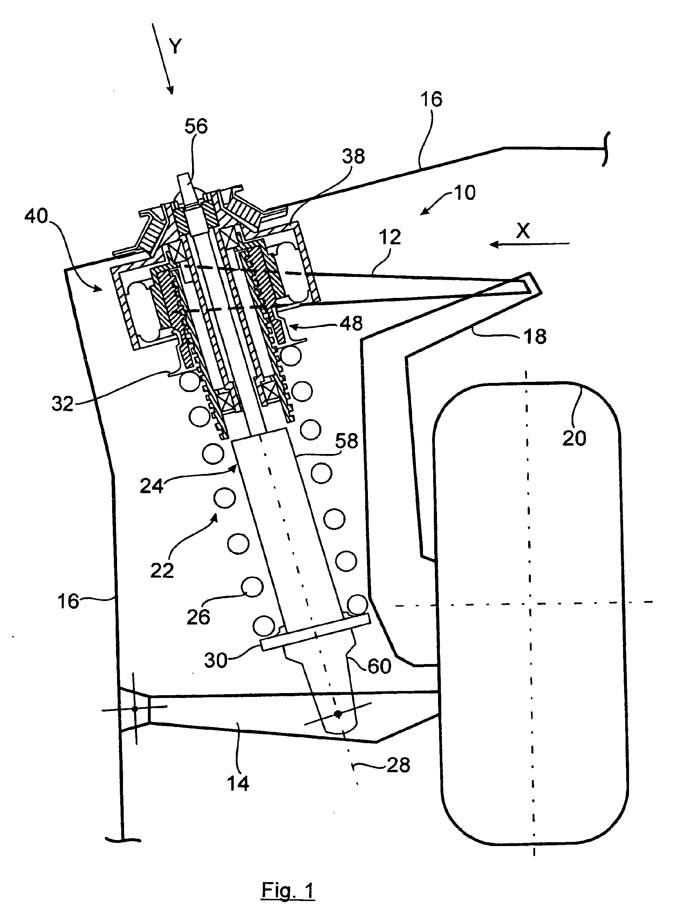

Die **Fig. 1** zeigt grob schematisch und in einer Ansicht von vorne eine Radaufhängung 10 für Kraftfahrzeuge, mit oberen Lenkern 12 und unteren Lenkern 14 (es ist jeweils nur ein Lenker 12, 14 dargestellt), die einerseits am Aufbau 16 und andererseits an einem Radträger-Arm 18 über entsprechende Gelenke (ohne Bezugszeichen) angelenkt sind. Das lenkbare Vorderrad 20 ist gemeinsam mit dem Radträger-Arm 18 an den Lenkern 12, 14 drehbar gelagert. Die an einem Lenkhebel des Radträger-Arms 18 angreifende Lenkeinrichtung des Kraftfahrzeuges ist nicht dargestellt.

Die Radaufhängung 10 weist ferner ein Federbein 22 auf, dessen TeleskopStoßdämpfer 24 am Aufbau 16 des Kraftfahrzeuges und an dem unteren, im wesentlichen quer verlaufenden Lenker 14 wie ersichtlich angelenkt ist.

Konzentrisch zur Federbein-Mittelachse 28 ist am Federbein 22 eine Schraubendruckfeder als Tragfeder 26 vorgesehen, die sich an einem unteren, festen Federteller 30 und an einem axial verschiebbar gelagerten Federteller 32 abstützt.

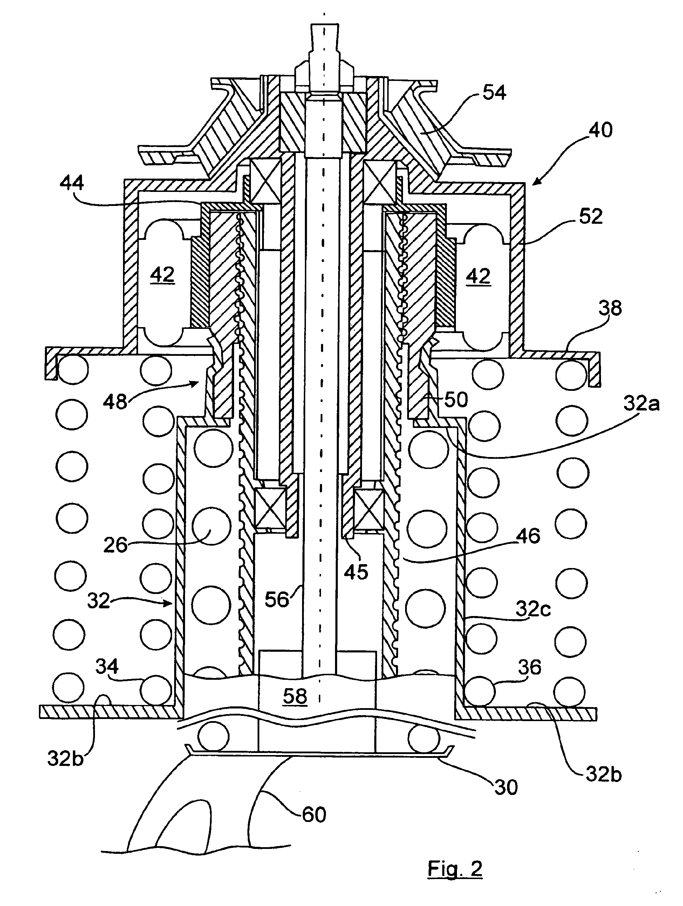

Oberhalb der Tragfeder 26 ist ferner eine durch zwei Schraubendruckfedern 34, 36 (vgl. **Fig. 2** **-** in der Schnittansicht **Fig. 1** nicht ersichtlich) gebildete Speicherfeder angeordnet, die sich einerseits an einem aufbaufesten Federteller 38 und andererseits ebenfalls an dem verschiebbaren Federteller 32 abstützt. Wie ersichtlich ist, wirkt die Federkraft der Speicherfeder 34, 36 der Federkraft der Tragfeder 26 quasi als innere Kraft entgegen. Die Federkräfte sind dabei so berechnet, dass bei unbeladenem Kraftfahrzeug und in dessen Konstruktionslage ein Gleichgewichtszustand vorliegt.

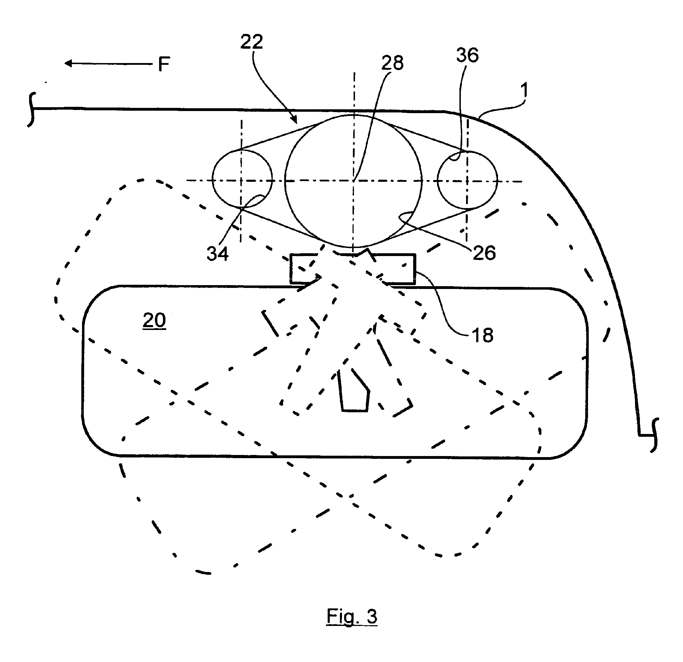

Die Schraubendruckfedern 34, 36 (vgl. **Fig. 2** **und** **3**) sind beiderseits der Tragfeder 26 und in Fahrzeuglängsrichtung bzw. in Fahrtrichtung F vor und hinter dieser mit symmetrischer Kraftwirkung auf die Federbein-Mittelachse 28 angeordnet. Der Durchmesser der Schraubendruckfedern 34, 36 ist kleiner als der Durchmesser der Tragfeder 26, so dass eine gedachte Hüllkurve um die Federn 26, 34, 36 (**Fig. 3**) ein Oval bildet.

Ferner sind die Durchmesser der außerhalb der Hüllfläche der Tragfeder 26 angeordneten Schraubendruckfedern 34, 36 so ausgelegt, dass für das Rad 20 bei vollem beidseitigen Lenkeinschlag (gestrichelte Linien) ein ausreichender Freiraum auch bei ausgefedertem und voll eingefedertem Rad 20 verbleibt. Gleiches gilt für den erforderlichen Bewegungsraum des Radträgers 18.

Der axial verstellbare Federteller 32 (**Fig. 2**) ist im Querschnitt hutförmig ausgeführt mit einer oberen Anlagefläche 32a für die Tragfeder 26 und einer unteren Anlagefläche 32b für die beiden Schraubendruckfedern 34, 36. Die Anlagefläche 32b ist entsprechend oval zur Aufnahme der beiden Schraubendruckfedern 34, 36 ausgebildet. Durch die hutförmige Gestaltung des Federtellers 32 können die Tragfeder 26 und die Schraubendruckfedern 34, 36 bezüglich deren Baulänge ineinander verschachtelt angeordnet sein, wodurch die erforderliche Baulänge insgesamt deutlich verringerbar ist.

Der elektromechanische Aktuator 40 weist zur Führung und zur axialen Verstellung des Federtellers 32 einen Elektromotor mit radial äußeren Wicklungen 42 und einem Rotor 44 auf, der wiederum eine radial innenliegende, auf einem Führungszapfen 45 wälzgelagerte Stellhülse 46 eines an sich bekannten Kugelschraubtriebes 48 antreibt. Die Stellhülse 46 ist über nicht dargestellte Kugeln trieblich mit der radial äußeren Kugelmutter 50 verbunden, an der der Federteller 32 befestigt ist. Durch elektromotorisches Verdrehen der Stellhülse 46 wird die Kugelmutter 50 mit dem Federteller 32 axial relativ zum Aufbau 16 verschoben.

Das Gehäuse 52 des Elektromotors 42, 44 ist wie ersichtlich am Aufbau 16 des Kraftfahrzeuges unter Zwischenschaltung eines rotationssymmetrischen Dämpferlagers 54 befestigt. Der unterhalb des Elektromotors 42, 44 positionierte, aufbaufeste Federteller 38 für die Schraubendruckfedern 34, 36 ist an dem Gehäuse 52 befestigt. Der Elektromotor 42, 44 kann sich deshalb in radialer Richtung über die Schraubendruckfedern 34, 36 erstrecken (**Fig. 2**).

An dem Dämpferlager 54 ist ferner die Kolbenstange 56 des Stoßdämpfers 22 angelenkt, dessen Dämpferrohr 58 über eine Dämpferstelze 60 an dem unteren Lenker 14 gelenkig befestigt ist.

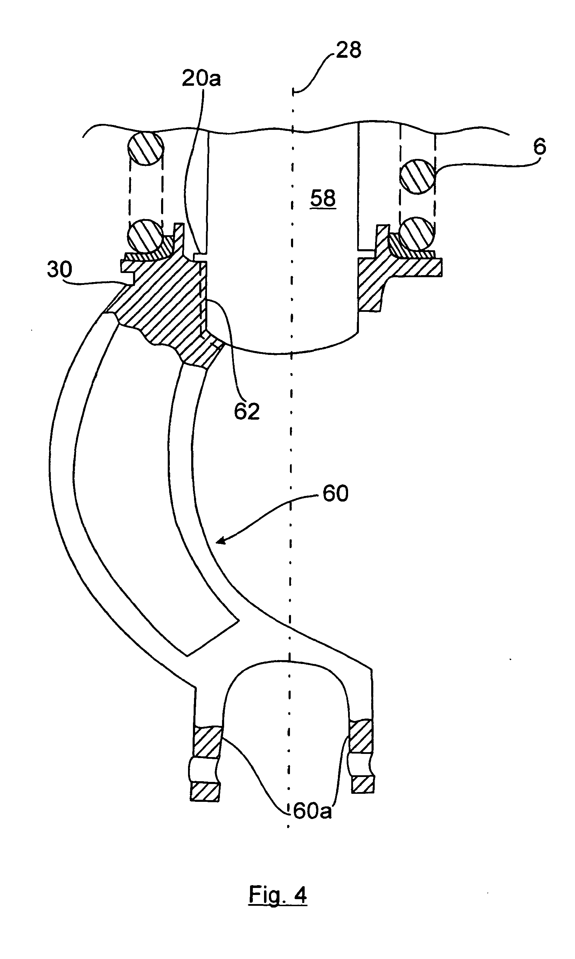

Wie insbesondere aus **Fig. 4** ersichtlich ist, ist der Federteller 30 unmittelbar an die Dämpferstelze 60 angeformt. Ferner ist das Dämpferrohr 58 mittels einer koaxial zur Stoßdämpfer-Mittelachse 28 ausgerichteten Gewindeverbindung 62 fest in die Dämpferstelze 60 eingeschraubt. Dazu weist das Dämpferrohr 58 ein Außengewinde auf, das in ein korrespondierendes Innengewinde der Dämpferstelze 60 bis zu einem ringförmigen Anschlag 20a am Dämpferrohr 58 eingeschraubt ist.

Die Dämpferstelze 60 ist mit ihrem gabelförmigen Anschlussteil 60a kardanisch beweglich am Lenker 14 über ein nicht dargestelltes Gummi-Metall-Hülsenlager angeschlossen.

In nicht dargestellter Weise können zwischen dem Federteller 38 und dem verschiebbaren Federteller 32 sowie zwischen dem Nabenabschnitt 32c des Federtellers 32 und dem unteren, festen Federteller 30 gummielastische Schutzmanschetten vorgesehen sein, die einem Eindringen von Schmutz und Feuchtigkeit insbesondere in den Kugelschraubtrieb 48 entgegenwirken.

Anstelle der zwei Schraubendruckfedern 34, 36 können ggf. auch mehrere Schraubendruckfedern je Seite vorgesehen sein, z.B. jeweils zwei teleskopisch ineinander oder auch benachbart zueinander angeordnete Schraubendruckfedern kleineren Durchmessers.

## Patentansprüche

1. Radaufhängung für Kraftfahrzeuge, mit einem Federbein, das aus einem Stoßdämpfer (24), einer Tragfeder (26) und einer Speicherfeder (34, 36) gebildet ist, wobei die Tragfeder (26) und die Speicherfeder (34, 36) am Aufbau (16) des Kraftfahrzeuges und dämpferrohrseitig abgestützt sind und ein dazwischen befindlicher Federteller (32) über einen Aktuator relativ zum Aufbau (16) entlang der Stoßdämpfer-Mittelachse verstellbar geführt ist, **dadurch gekennzeichnet, dass** die Speicherfeder durch zumindest zwei Einzelfedern (34, 36) gebildet ist, die radial außerhalb der Tragfeder (26) so angeordnet sind, dass sie eine zentrische Federkraft auf das Federbein ausüben.

2. Radaufhängung nach Anspruch 1, **dadurch gekennzeichnet, dass** die beiden Einzelfedern (34, 36) in der Draufsicht auf das Federbein (22) gesehen beiderseits der Tragfeder (26) und vorzugsweise in Fahrzeuglängsrichtung ausgerichtet sind.

3. Radaufhängung nach Anspruch 1 oder 2, **dadurch gekennzeichnet, dass** die beiden Einzelfedern, vorzugsweise Schraubendruckfedern (34, 36), einen kleineren Durchmesser als die Tragfeder (26) aufweisen.

4. Radaufhängung nach einem der vorhergehenden Ansprüche, **dadurch gekennzeichnet, dass** die beiden Einzelfedern (34, 36) im Durchmesser so ausgelegt sind, dass bei einer Radaufhängung (10) für gelenkte Räder (20) des Kraftfahrzeuges ein definierter Freigang bei vollem beidseitigen Lenkeinschlag der Räder (20) sichergestellt ist.

5. Radaufhängung nach einem der vorhergehenden Ansprüche, **dadurch gekennzeichnet, dass** die beiden Einzelfedern (34, 36) und die Tragfeder (26) in Seitenansicht gesehen ineinander verschachtelt angeordnet sind.

6. Radaufhängung nach einem der vorhergehenden Ansprüche, **dadurch gekennzeichnet, dass** der verstellbare Federteller (32) im Querschnitt hutförmig mit axial zueinander versetzten Anlageflächen (32a, 32b) für die Tragfeder (26) und die beiden Einzelfedern (34, 36) gestaltet ist.

7. Radaufhängung nach einem der vorhergehenden Ansprüche, **dadurch gekennzeichnet, dass** die beiden Einzelfedern (34, 36) axial versetzt unterhalb des Aktuators (40) angeordnet sind.

8. Radaufhängung für Kraftfahrzeuge nach einem der vorhergehenden Ansprüche, mit einem Federbein (10), das über eine Dämpferstelze (24) mit einem Radaufhängungselement verbunden ist sowie einen Stoßdämpfer (14) und zumindest eine Tragfeder (16, 18) aufweist, die über einen dämpferseitigen Federteller (30) am Dämpferrohr (20) des Stoßdämpfers (14) abgestützt ist, **dadurch gekennzeichnet, dass** der dämpferseitige Federteller (30) materialeinheitlich und einstückig an der Dämpferstelze (24) angeformt ist.

9. Radaufhängung nach Anspruch 8, **dadurch gekennzeichnet, dass** das Dämpferrohr (20) des Stoßdämpfers (14) über eine koaxial zur Dämpfermittelachse (32) ausgerichtete Gewindeverbindung (34) in die Dämpferstelze (24) eingeschraubt ist.

10. Radaufhängung nach Anspruch 9, **dadurch gekennzeichnet, dass** der Federteller (30) der Dämpferstelze (24) ringförmig ausgebildet ist, an dessen Innenseite ein Innengewinde zur Verschraubung mit dem Stoßdämpfer (14) vorgesehen ist.

## Claims

1. Wheel suspension for motor vehicles, comprising a suspension strut which is formed of a shock absorber (24), a bearing spring (26) and a pre-loaded spring (34, 36), the bearing spring (26) and the pre-loaded spring (34, 36) being supported on the body (16) of the motor vehicle and on the damper tube side, and a spring collar (32) located in between being guided relative to the body (16) along the central axis of the shock absorber in an adjustable manner via an actuator, **characterised in that** the pre-loaded spring is formed by at least two individual springs (34, 36) which are arranged radially outside the bearing spring (26) in such a way that they exert a central spring force on the suspension strut.

2. Wheel suspension according to claim 1, **characterised in that** the two individual springs (34, 36), seen in the plan view of the suspension strut (22), are arranged on each side of the bearing spring (26) and preferably in the longitudinal direction of the vehicle.

3. Wheel suspension according to either claim 1 or claim 2, **characterised in that** the two individual springs, preferably helical compression springs (34, 36), have a smaller diameter than the bearing spring (26).

4. Wheel suspension according to any of the preceding claims, **characterised in that** the two individual springs (34, 36) have a diameter such that, in a wheel suspension (10) for steered wheels (20) of the motor vehicle, a defined clearance is ensured in the case of full steering lock, on each side, of the wheels (20).

5. Wheel suspension according to any of the preceding claim, **characterised in that** the two individual springs (34, 36) and the bearing spring (26) are nested inside one another when seen in a side view.

6. Wheel suspension according to any of the preceding claims, **characterised in that** the adjustable spring collar (32) is hat-shaped in cross-section and comprises contact faces (32a, 32b) which are axially offset from one another for the bearing spring (26) and the two individual springs (34, 36).

7. Wheel suspension according to any of the preceding claims, **characterised in that** the two individual springs (34, 36) are arranged in an axially offset manner below the actuator (40).

8. Wheel suspension for motor vehicles according to any of the preceding claims, comprising a suspension strut (10) which is connected to a wheel suspension element via a damper stilt (24) and comprises a shock absorber (14) and at least one bearing spring (16, 18) which is supported on the damper tube (20) of the shock absorber (14) via a damper side spring collar (30), **characterised in that** the damper side spring collar (30) is integrally formed on the damper stilt (24) in one piece and in the same material.

9. Wheel suspension according to claim 8, **characterised in that** the damper tube (20) of the shock absorber (14) is screwed into the damper stilt (24) via a threaded connection (34) arranged coaxially with the damper central axis (32).

10. Wheel suspension according to claim 9, **characterised in that** the spring collar (30) of the damper stilt (24) is annular and is provided on the inside with an internal thread for the screw connection to the shock absorber (14).

## Revendications

1. Suspension de roues pour véhicules automobiles, comprenant une jambe de force à ressort, qui est formée d'un amortisseur de chocs (24), d'un ressort de suspension (26) et d'un ressort accumulateur (34, 36), dans laquelle le ressort de suspension (26) et le ressort accumulateur (34, 36) sont supportés sur la structure (16) du véhicule automobile et côté tube amortisseur et une cuvette de ressort (32) se trouvant entre eux est guidée de manière à pouvoir se déplacer le long de l'axe central de l'amortisseur de chocs via un actionneur par rapport à la structure (16), **caractérisée en ce que** le ressort accumulateur est formé d'au moins deux ressorts individuels (34, 36) qui sont aménagés radialement à l'extérieur du ressort de suspension (26) de sorte qu'ils exercent une force élastique centrale sur la jambe de force à ressort (22).

2. Suspension de roues selon la revendication 1, **caractérisée en ce que** les deux ressorts individuels (34, 36), lorsqu'on observe la jambe de force à ressort (22) en vue de dessus, sont alignés des deux côtés du ressort de suspension (26) et, de préférence, dans la direction longitudinale du véhicule automobile.

3. Suspension de roues selon la revendication 1 ou la revendication 2, **caractérisée en ce que** les deux ressorts individuels, de préférence des ressorts de compression hélicoïdaux (34, 36), présentent un diamètre plus petit que celui du ressort de suspension (26).

4. Suspension de roues selon l'une quelconque des revendications précédentes, **caractérisée en ce que** les deux ressorts individuels (34, 36) ont un diamètre tel que, dans une suspension (10) pour des roues directrices (20) du véhicule automobile, une liberté de mouvement définie est assurée dans le cadre d'un braquage complet des roues (20) des deux côtés.

5. Suspension de roues selon l'une quelconque des revendications précédentes, **caractérisée en ce que** les deux ressorts individuels (34, 36) et le ressort de suspension (26) sont, observés en vue latérale, agencés imbriqués l'un dans l'autre.

6. Suspension de roues selon l'une quelconque des revendications précédentes, **caractérisée en ce que** la cuvette de ressort réglable (32) est conformée en calotte en coupe transversale avec des faces d'appui (32a, 32b) décalées axialement l'une de l'autre pour le ressort de suspension (26) et les deux ressorts individuels (34, 36).

7. Suspension de roues selon l'une quelconque des revendications précédentes, **caractérisée en ce que** les deux ressorts individuels (34, 36) sont agencés décalés axialement en dessous de l'actionneur (40).

8. Suspension de roues selon l'une quelconque des revendications précédentes, comprenant une jambe de force à ressort (10), qui est reliée à un élément de suspension de roues via un montant d'amortisseur (24) et présente également un amortisseur de chocs (14) et au moins un ressort de suspension (16, 18) qui est supporté sur le tube d'amortisseur (20) de l'amortisseur de chocs (14) via une cuvette de ressort côté amortisseur (30), **caractérisée en ce que** la cuvette de ressort côté amortisseur (30) est formée d'un seul matériau et d'une pièce avec le montant d'amortisseur (24).

9. Suspension de roues selon la revendication 8, **caractérisée en ce que** le tube d'amortisseur (20) de l'amortisseur de chocs (14) est vissé dans le montant d'amortisseur (24) via une liaison filetée (34) alignée coaxialement sur l'axe central (32) de l'amortisseur.

10. Suspension de roues selon la revendication 9, **caractérisée en ce que** la cuvette de ressort (30) du montant d'amortisseur (24) a une forme annulaire sur le côté intérieur de laquelle est prévu un filet intérieur pour visser sur l'amortisseur de chocs (14).
